# EUROPEAN PATENT SPECIFICATION

(11) **EP 3 626 481 B1**
(45) Date of publication and mention of the grant of the patent: **06.01.2021**
(21) Application number: 19190655.1
(22) Date of filing: 08.08.2019
(51) Int. Cl.: B60C 1/00, B60C 11/00, B60C 11/03, B60C 11/12, B60C 11/04

(54) **PNEUMATIC TIRE**
LUFTREIFEN
PNEUMATIQUE

(30) Priority: 09.08.2018 JP 2018150624
(43) Date of publication of application: 25.03.2020
(73) Proprietor: Sumitomo Rubber Industries, Ltd., Kobe-shi, Hyogo-ken 651-0072 (JP)
(72) Inventor: HAMAMURA, Kenji, Kobe-shi, Hyogo-ken, 651-0072 (JP)
(74) Representative: Manitz Finsterwald Patent- und Rechtsanwaltspartnerschaft mbB

(56) References cited:
- EP-A1- 0 864 446
- EP-A1- 1 308 319
- EP-A1- 1 619 048
- EP-A1- 1 630 004
- EP-A1- 2 749 404

## Description

### BACKGROUND OF THE INVENTION

### Field of the Invention

The present invention relates to a pneumatic tire.

### Description of the Background Art

Pneumatic tires such as tires for passenger cars and heavy duty tires are required to have steering stability and braking performance on dry road surfaces and wet road surfaces, from the viewpoints of safety and the like. Therefore, for example, a method in which a block pattern is used as a tread pattern, etc., has been employed. In addition, it has also been known that it is effective to, for example, increase the number of lateral grooves and longitudinal grooves, groove volumes, and the like.

Conventionally, attempts have been made to enhance the steering stability and the like by forming sipes in tread portions of pneumatic tires. For example, Japanese Laid-Open Patent Publication No. 2015-13606 proposes a pneumatic tire in which predetermined middle lateral grooves are provided in middle land portions and predetermined groove bottom sipes are provided in the middle lateral grooves, so that the tire has enhanced steering stability on dry road surfaces, and the like.

However, further enhancement has been required for obtaining both steering stability and braking performance on dry road surfaces and wet road surfaces.

A pneumatic tire with the features from the preamble of claim 1 is disclosed in EP 1 630 004 A1.

Further pneumatic tires are disclosed in EP 1 308 319 A1, EP 1 619 048 A1, EP 2 749 404 A1 and EP 0 864 446 A1.

### SUMMARY OF THE INVENTION

The present invention has been made to solve the above problem, and an object of the present invention is to provide a pneumatic tire that enables steering stability and braking performance on a dry road surface and a wet road surface to be enhanced in a balanced manner.

The present invention is directed to a pneumatic tire including a tread portion which has at least three circumferential main grooves extending in a tire circumferential direction, and at least four land portions separated by the circumferential main grooves and including shoulder land portions provided on outermost sides in a tire axial direction.

At least one of the shoulder land portions has shoulder lateral grooves extending in the tire axial direction, and, as necessary, axial sipes extending in the tire axial direction.

Within a tread ground-contact surface, a length in the tire axial direction of each of the shoulder lateral grooves is 10 to 30% of a tread width, and the following formula (I) is satisfied:
0 ≤ a total length in the tire axial direction of the axial sipes/a total length in the tire axial direction of the shoulder lateral grooves ≤ 0.2 (I).

A rubber composition forming each shoulder land portion contains not less than 10 parts by mass of carbon black and not less than 90 parts by mass of silica, per 100 parts by mass of a rubber component.

The rubber composition forming each shoulder land portion preferably contains not less than 20 parts by mass of the carbon black per 100 parts by mass of the rubber component.

A distance in a tire circumferential direction between the shoulder lateral grooves that are adjacent to each other is preferably 5 to 15% of the tread width.

The present invention is the pneumatic tire including a tread portion which has at least three circumferential main grooves extending in a tire circumferential direction, and at least four land portions separated by the circumferential main grooves and including shoulder land portions provided on outermost sides in a tire axial direction.

At least one of the shoulder land portions has a plurality of shoulder lateral grooves extending in the tire axial direction, and, as necessary, axial sipes extending in the tire axial direction.

Within a tread ground-contact surface, a length in the tire axial direction of each of the shoulder lateral grooves is 10 to 30% of a tread width, and the following formula (I) is satisfied:
0 ≤ a total length in the tire axial direction of the axial sipes/a total length in the tire axial direction of the shoulder lateral grooves ≤ 0.2 (I).

A rubber composition forming each shoulder land portion contains not less than 10 parts by mass of carbon black and not less than 90 parts by mass of silica, per 100 parts by mass of a rubber component.

Accordingly, the pneumatic tire enables steering stability and braking performance on a dry road surface and a wet road surface to be enhanced in a balanced manner.

### BRIEF DESCRIPTION OF THE DRAWINGS

FIG. 1 is an exemplary development of a tread portion 2 of a pneumatic tire 1 according to an embodiment (not according to the invention); and
FIG. 2 is an exemplary enlarged view of a shoulder land portion 4s in the tread portion 2 in FIG. 1 (not according to the invention).

### DESCRIPTION OF THE PREFERRED EMBODIMENTS

The present invention is a pneumatic tire including a tread portion which has at least three circumferential main grooves extending in a tire circumferential direction, at least four land portions separated by the circumferential main grooves and including shoulder land portions provided on outermost sides in a tire axial direction, a plurality of shoulder lateral grooves formed in at least one of the shoulder land portions and extending in the tire axial direction, and, as necessary, axial sipes formed in the at least one of the shoulder land portions and extending in the tire axial direction.

A length in the tire axial direction of each of the shoulder lateral grooves is 10 to 30% of a tread width.

Within a tread ground-contact surface, the following formula is satisfied:
0 ≤ a total length in the tire axial direction of the axial sipes in the shoulder land portion/a total length in the tire axial direction of the shoulder lateral grooves in the shoulder land portion ≤ 0.2.

A rubber composition forming each shoulder land portion contains not less than 10 parts by mass of carbon black and not less than 90 parts by mass of silica, per 100 parts by mass of a rubber component.

The pneumatic tire enables steering stability and braking performance on a dry road surface and a wet road surface to be enhanced in a balanced manner. The reason why such an advantageous effect is obtained is not clear, but is inferred as described below.

The shoulder lateral grooves provided in the shoulder land portion of the tire and extending in the tire axial direction contribute to the steering stability. In particular, if the length in the tire axial direction of each shoulder lateral groove is set to be not greater than 30% of the tread width, favorable steering stability is obtained, and, if the length is set to be not less than 10% of the tread width, favorable ride comfort is also ensured.

A value (parameter) of the total length in the tire axial direction of the axial sipes in the shoulder land portion/the total length in the tire axial direction of the shoulder lateral grooves in the shoulder land portion, contributes to the steering stability and the braking performance on a dry road surface and a wet road surface. In particular, if the value is set to be not greater than 0.2, the area of contact with a ground-contact surface of each land portion of the tread increases. Accordingly, an effect from forming the shoulder land portion from the rubber composition containing not less than 10 parts by mass of carbon black and not less than 90 parts by mass of silica is sufficiently exhibited, thereby enhancing the steering stability and the braking performance on a dry road surface and a wet road surface. Owing to the above effects, the steering stability and the braking performance on a dry road surface and a wet road surface are enhanced in a balanced manner.

Hereinafter, an embodiment of the present invention will be described with reference to the drawings.

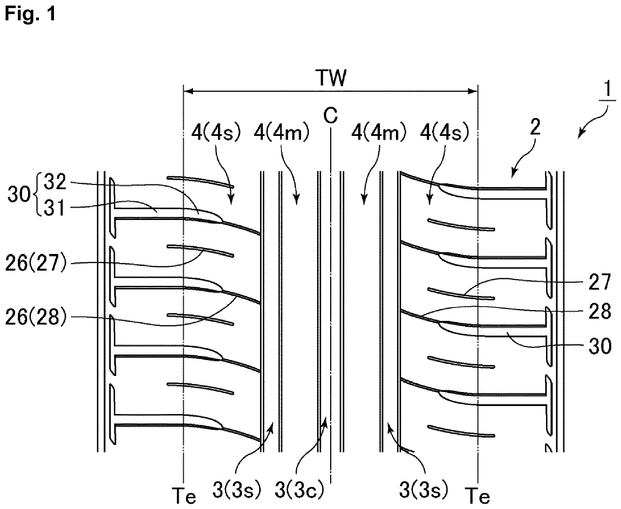

FIG. 1 is a development of a tread portion 2 of a pneumatic tire (hereinafter, sometimes referred to simply as "tire") 1 (not according to the invention). The pneumatic tire 1 is suitably used as, for example, a radial tire for a passenger car.

As shown in FIG. 1, the tread portion 2 of the tire 1 has three circumferential grooves 3 including a pair of shoulder main grooves 3s and 3s extending in the tire circumferential direction, and a center main groove 3c interposed therebetween. Although the tire in FIG. 1 has three circumferential main grooves 3, the number of the circumferential main grooves 3 is not particularly limited as long as the number is not less than three, and four or more circumferential main grooves 3 may be provided.

Each shoulder main groove 3s continuously extends in the tire circumferential direction on the side where a tread ground-contact edge Te is present. The shoulder main groove 3s in the present embodiment has a substantially uniform groove width and is linear. The shoulder main groove 3s may be wavy or zigzag.

The "tread ground-contact edge Te" refers to a ground-contact position on the outermost side in the tire axial direction when a normal load is applied to the tire 1 in a normal state and the tire 1 is brought into contact with a flat surface at a camber angle of 0°.

The "normal state" refers to a state where the tire is mounted to a normal rim (not shown) and inflated to a normal internal pressure, and no load is applied to the tire. Hereinafter, unless otherwise specified, the dimensions of components of the tire, and the like, are values measured in the normal state.

The "normal rim" refers to a rim that is defined, in a standard system including a standard on which the tire is based, by the standard for each tire, and is, for example, the "Standard Rim" in the JATMA standard, the "Design Rim" in the TRA standard, or the "Measuring Rim" in the ETRTO standard.

The "normal internal pressure" refers to an air pressure that is defined, in a standard system including a standard on which the tire is based, by the standard for each tire, and is the "maximum air pressure" in the JATMA standard, the maximum value indicated in the table "TIRE LOAD LIMITS AT VARIOUS COLD INFLATION PRESSURES" in the TRA standard, or the "INFLATION PRESSURE" in the ETRTO standard.

The "normal load" refers to a load that is defined, in a standard system including a standard on which the tire is based, by the standard for each tire, and is the "maximum load capacity" in the JATMA standard, the maximum value indicated in the table "TIRE LOAD LIMITS AT VARIOUS COLD INFLATION PRESSURES" in the TRA standard, or the "LOAD CAPACITY" in the ETRTO standard.

The center main groove 3c is provided inward of the shoulder main groove 3s in the tire axial direction. The center main groove 3c continuously extends in the tire circumferential direction. The center main groove 3c has a substantially uniform groove width and is linear. The number of center main grooves 3c in the present embodiment is one, and the center main groove 3c is provided on a tire equator C. The number of center main grooves 3c may be two and the center main grooves 3c may be provided on both sides in the tire axial direction of the tire equator C, for example.

As shown in FIG. 1, the tread portion 2 is divided into four land portions 4 which include a pair of middle land portions 4m and 4m and a pair of shoulder land portions 4s and 4s. Each middle land portion 4m is provided between the shoulder main groove 3s and the center main groove 3c. Although the tire in FIG. 1 includes four land portions 4 which are separated by the shoulder main grooves 3s and the center main groove 3c and which extend in the tire circumferential direction, the number of the land portions 4 is not particularly limited as long as four or more land portions 4 including the shoulder land portions 4s arranged on the outermost sides in the tire axial direction are provided, and five or more land portions 4 may be provided.

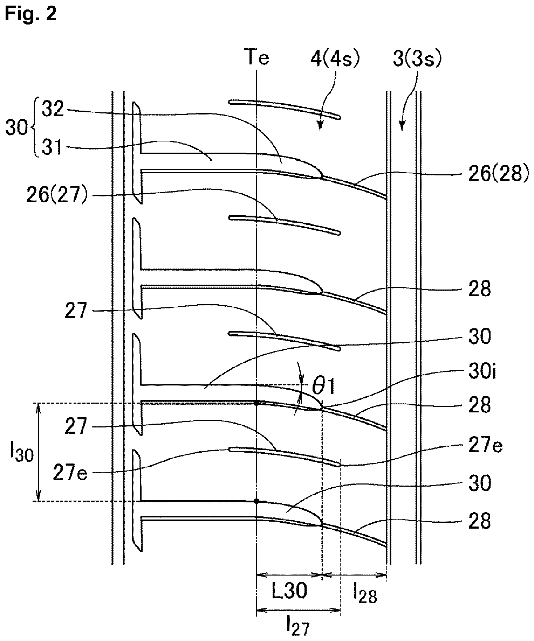

FIG. 2 shows an enlarged view of the shoulder land portion 4s. As shown in FIG. 2, the shoulder land portion 4s is provided outward of the shoulder main groove 3s in the tire axial direction (outward thereof in the tire width direction).

The shoulder land portion 4s has a plurality of shoulder lateral grooves 30 and a plurality of axial sipes 26 which extend in the tire axial direction (tire width direction). The shoulder lateral grooves 30 and the axial sipes 26 have to be provided only in one or both of the shoulder land portions 4s arranged on the outermost sides in the tire axial direction. In the present specification, "sipe" is defined as a slit having a width smaller than 2 mm, and "groove" is defined as a groove-like recess having a groove width not smaller than 2 mm.

The shoulder lateral grooves 30 extend inward in the tire axial direction (inward in the tire width direction) from the tread ground-contact edge Te. Such shoulder lateral grooves 30 impart stiffness to an inner-side portion in the tire axial direction of the shoulder land portion 4s.

Each shoulder lateral groove 30 includes a first portion 31 and a second portion 32. The first portion 31 of the shoulder lateral groove 30 extends parallel to the tire axial direction. The second portion 32 of the shoulder lateral groove 30 is contiguous to the inner side in the tire axial direction of the first portion 31, and extends inward in the tire axial direction such that the angle θ1 of the shoulder lateral groove 30 relative to the tire axial direction gradually increases.

Within a tread ground-contact surface (between the tread ground-contact edges Te and Te), the length in the tire axial direction (the length in the tire width direction) of each shoulder lateral groove 30 is 10 to 30% of a tread width. Since a plurality of such shoulder lateral grooves 30 are provided, favorable steering stability is obtained. If the length is set to be not less than the lower limit, each pattern land portion tends to flexibly move, and ride comfort tends to be enhanced. If the length is set to be not greater than the upper limit, the steering stability tends to be enhanced.

Here, the tread width refers to a maximum width in the tire axial direction of the tread ground-contact surface when the tire is mounted to the normal rim, inflated to the normal internal pressure, and placed in a stationary state so as to be perpendicular to a flat board, and the normal load is applied to the tire. In FIG. 1, the tread width is represented by TW (the distance between the tread ground-contact edges Te and Te). The length in the tire axial direction of each shoulder lateral groove refers to the projection length in the tire axial direction of each shoulder lateral groove within the tread ground-contact surface. In FIG. 2, the length is represented by L30.

The "tread ground-contact surface" refers to a tread surface that is to come into contact with the ground when the normal load is applied to the tire mounted to the normal rim and inflated to the normal internal pressure. The "tread ground-contact edges" refer to the outermost positions, in the tire axial direction, on the tread ground-contact surface.

From the viewpoint of enhancement of the steering stability, the distance in the tire circumferential direction between the shoulder lateral grooves 30 and 30 that are adjacent in the tire circumferential direction is preferably within a range of 5 to 15% of the tread width. Here, the distance in the tire circumferential direction between the shoulder lateral grooves that are adjacent in the tire circumferential direction refers to the distance, on the tread ground-contact edge, between the shoulder lateral grooves that are adjacent in the tire circumferential direction. In FIG. 2, the distance is represented by l₃₀.

The axial sipes 26 in FIGS. 1 and 2 include first shoulder sipes 27 and second shoulder sipes 28.

Each first shoulder sipe 27 is provided between the shoulder lateral grooves 30 and 30 that are adjacent in the tire circumferential direction. The first shoulder sipe 27 extends substantially parallel to the shoulder lateral grooves 30. The first shoulder sipe 27 is a closed sipe of which both ends 27e and 27e terminate within the shoulder land portion 4s.

The first shoulder sipes 27 and the shoulder lateral grooves 30 are preferably arranged alternately in the tire circumferential direction. By such arrangement, the stiffness distribution of the shoulder land portion 4s becomes uniform, whereby uneven wear of the shoulder land portion 4s is suppressed.

The second shoulder sipes 28 extend to the shoulder main groove 3 from inner ends 30i in the tire axial direction (tire width direction) of the shoulder lateral grooves 30. The second shoulder sipes 28 are tilted relative to the tire axial direction at the same angle as that of the second portions 32 of the shoulder lateral grooves 30.

Within the tread ground-contact surface of the tire 1, the total length in the tire axial direction of the axial sipes in the shoulder land portion and the total length in the tire axial direction of the shoulder lateral grooves in the shoulder land portion, satisfy formula (I) described below (formula (I) is not satisfied in the drawings). If formula (I) is satisfied, favorable steering stability and braking performance on a dry road surface and a wet road surface are obtained.

0 ≤ the total length in the tire axial direction of the axial sipes/the total length in the tire axial direction of the shoulder lateral grooves ≤ 0.2 (I)

The value of the total length in the tire axial direction of the axial sipes/the total length in the tire axial direction of the shoulder lateral grooves is preferably 0.1 to 0.2. If the value is set to be not greater than 0.2, the area of contact with the ground-contact surface of each land portion of the tread increases, and an effect of the rubber composition can be sufficiently exhibited.

As described above, the length in the tire axial direction of each shoulder lateral groove refers to the projection length in the tire axial direction of each shoulder lateral groove within the tread ground-contact surface. Likewise, the length in the tire axial direction of each axial sipe (each sipe extending in the tire width direction) refers to the projection length in the tire axial direction of each axial sipe within the tread ground-contact surface. In FIG. 2, the length in the tire axial direction of one shoulder lateral groove 30 is represented by L30, the length in the tire axial direction of one first shoulder sipe 27 (axial sipe) is represented by l₂₇, and the length in the tire axial direction of one second shoulder sipe 28 (axial sipe) is represented by l₂₈ and formula (I) is not satisfied. The total length in the tire axial direction of the axial sipes, and the total length in the tire axial direction of the shoulder lateral grooves, respectively refer to the total (sum) of the lengths in the tire axial direction of the axial sipes provided within the tread ground-contact surface, and the total (sum) of the lengths in the tire axial direction of the shoulder lateral grooves provided within the tread ground-contact surface.

The rubber composition forming the shoulder land portions 4s contains not less than 10 parts by mass of carbon black and not less than 90 parts by mass of silica, per 100 parts by mass of a rubber component.

In the tread portion 2, merely at least the shoulder land portions 4s have to be formed from the rubber composition. Therefore, while the shoulder land portions 4s are formed from the rubber composition, portions other than the shoulder land portions 4s may be formed from another rubber composition. Alternatively, the entire tread portion 2 may be formed from the rubber composition.

The amount of the carbon black per 100 parts by mass of the rubber component in the rubber composition is not less than 10 parts by mass, but preferably not less than 20 parts by mass. If the amount is set to be not less than the lower limit, the stiffness is increased, and thus the steering stability tends to be enhanced. Although the upper limit of the amount is not particularly limited, the amount is preferably not greater than 50 parts by mass, more preferably not greater than 40 parts by mass, and further preferably not greater than 30 parts by mass, from the viewpoints of dispersibility, low fuel consumption performance, and the like.

The nitrogen adsorption specific surface area (N₂SA) of the carbon black is preferably not less than 100 m²/g, more preferably not less than 120 m²/g, and further preferably not less than 130 m²/g, from the viewpoint of steering stability. Although the upper limit of the N₂SA is not particularly limited, the N₂SA is preferably not greater than 180 m²/g and more preferably not greater than 160 m²/g, from the viewpoint of dispersibility.

The N₂SA of the carbon black is obtained in accordance with JIS K 6217-2: 2001.

The usable carbon black is not particularly limited, and examples thereof include N134, N220, N330, and N550. As commercially available products, products of Asahi Carbon Co., Ltd., Cabot Japan K.K., Tokai Carbon Co., Ltd., Mitsubishi Chemical Corporation, Lion Corporation, NSCC Carbon Co., Ltd., Columbia Carbon Co., etc., can be used. These carbon blacks may be used singly, or two or more of these carbon blacks may be used in combination.

The amount of the silica per 100 parts by mass of the rubber component in the rubber composition is not less than 90 parts by mass, but preferably not less than 92 parts by mass, more preferably not less than 95 parts by mass, further preferably not less than 97 parts by mass, and particularly preferably not less than 100 parts by mass. With such an amount, favorable braking performance on a dry road surface and a wet road surface tends to be obtained. Although the upper limit of the amount is not particularly limited, the amount is preferably not greater than 200 parts by mass, more preferably not greater than 150 parts by mass, and further preferably not greater than 140 parts by mass. If the amount is set to be not greater than the upper limit, the silica tends to be favorably dispersed.

The nitrogen adsorption specific surface area (N₂SA) of the silica is preferably not less than 80 m²/g, more preferably not less than 115 m²/g, and further preferably not less than 150 m²/g. If the N₂SA is set to be not less than the lower limit, favorable braking performance on a dry road surface and a wet road surface tends to be obtained. Meanwhile, the N₂SA is preferably not greater than 400 m²/g, more preferably not greater than 270 m²/g, and further preferably not greater than 250 m²/g. If the N₂SA is set to be not greater than the upper limit, favorable dispersibility of the silica tends to be obtained. The N₂SA of the silica is measured by the BET method in accordance with ASTM D3037-93.

The silica is not particularly limited, and, for example, dry-process silica (anhydrous silica), wet-process silica (hydrous silica), etc., can be used. Wet-process silica (hydrous silica) is preferable because of a higher silanol group content thereof. As commercially available products, products of Degussa, Rhodia, Tosoh Silica Corporation, Solvay Japan, Ltd., Tokuyama Corporation, etc., can be used. These silicas may be used singly, or two or more of these silicas may be used in combination.

In addition to the carbon black and the silica, another filler may be blended in the rubber composition. Examples of the other filler include calcium carbonate, talc, alumina, clay, aluminum hydroxide, and mica.

The amount of the filler per 100 parts by mass of the rubber component in the rubber composition is preferably 100 to 200 parts by mass and more preferably 110 to 180 parts by mass, from the viewpoints of steering stability and braking performance on a dry road surface and a wet road surface.

In the case where the rubber composition contains silica, the rubber composition preferably contains a silane coupling agent along with the silica.

The silane coupling agent is not particularly limited, and any silane coupling agent that is conventionally used in combination with silica in the rubber industry can be used. Examples of such a silane coupling agent include: sulfide silane coupling agents such as bis(3-triethoxysilylpropyl)tetrasulfide, bis(2-triethoxysilylethyl)tetrasulfide, bis(4-triethoxysilylbutyl)tetrasulfide, bis(3 -trimethoxysilylpropyl)tetrasulfide, bis(2-trimethoxysilylethyl)tetrasulfide, bis(2-triethoxysilylethyl)trisulfide, bis(4-trimethoxysilylbutyl)trisulfide, bis(3-triethoxysilylpropyl)disulfide, bis(2-triethoxysilylethyl)disulfide, bis(4-triethoxysilylbutyl)disulfide, bis(3-trimethoxysilylpropyl)disulfide, bis(2-trimethoxysilylethyl)disulfide, bis(4-trimethoxysilylbutyl)disulfide, 3-trimethoxysilylpropyl-N,N-dimethylthiocarbamoyl tetrasulfide, 2-triethoxysilylethyl-N,N-dimethylthiocarbamoyl tetrasulfide, and 3-triethoxysilylpropyl methacrylate monosulfide; mercapto silane coupling agents such as 3-mercaptopropyltrimethoxysilane, 2-mercaptoethyltriethoxysilane, and NXT and NXT-Z manufactured by Momentive; vinyl silane coupling agents such as vinyltriethoxysilane and vinyltrimethoxysilane; amino silane coupling agents such as 3-aminopropyltriethoxysilane and 3-aminopropyltrimethoxysilane; glycidoxy silane coupling agents such as γ-glycidoxypropyltriethoxysilane and γ-glycidoxypropyltrimethoxysilane; nitro silane coupling agents such as 3-nitropropyltrimethoxysilane and 3-nitropropyltriethoxysilane; and chloro silane coupling agents such as 3-chloropropyltrimethoxysilane and 3-chloropropyltriethoxysilane. As commercially available products, products of Degussa, Momentive, Shin-Etsu Silicones, Tokyo Chemical Industry Co., Ltd., AZmax, Dow Corning Toray Co., Ltd., etc., can be used. These silane coupling agents may be used singly, or two or more of these silane coupling agents may be used in combination. Among them, sulfide silane coupling agents and mercapto silane coupling agents are preferable.

In the case where the rubber composition contains a silane coupling agent, the amount of the silane coupling agent per 100 parts by mass of silica is preferably not less than 2 parts by mass and more preferably not less than 5 parts by mass. If the amount is set to be not less than the lower limit, an effect due to blending of the silane coupling agent tends to be obtained. Meanwhile, the amount is preferably not greater than 20 parts by mass and more preferably not greater than 15 parts by mass. If the amount is set to be not greater than the upper limit, an effect corresponding to the blending amount is obtained, and favorable processability during kneading tends to be obtained.

Examples of a usable rubber component include diene rubbers such as natural rubber (NR), isoprene rubber (IR), butadiene rubber (BR), styrene-butadiene rubber (SBR), styrene-isoprene-butadiene rubber (SIBR), ethylene-propylene-diene rubber (EPDM), chloroprene rubber (CR), acrylonitrile-butadiene rubber (NBR), and isobutylene-isoprene rubber (IIR). These rubber components may be used singly, or two or more of these rubber components may be used in combination. Among them, NR, BR, and SBR are preferable and SBR and BR are more preferable since such rubbers allow grip performance and wear resistance to be obtained in a balanced manner.

The SBR is not particularly limited, and, for example, emulsion-polymerized styrene butadiene rubber (E-SBR), solution-polymerized styrene butadiene rubber (S-SBR), and the like can be used. These SBRs may be used singly, or two or more of these SBRs may be used in combination.

The amount of the SBR in 100% by mass of the rubber component in the rubber composition is preferably not less than 30% by mass, more preferably not less than 50% by mass, and further preferably not less than 60% by mass. If the amount is set to be not less than the lower limit, favorable steering stability and braking performance on a dry road surface and a wet road surface tend to be obtained. Meanwhile, as for the upper limit of the amount of the SBR, the amount is preferably not greater than 95% by mass and more preferably not greater than 85% by mass.

The vinyl content of the SBR is preferably not less than 10% by mass, more preferably not less than 20% by mass, and further preferably not less than 24% by mass. Meanwhile, the vinyl content is preferably not greater than 60% by mass, more preferably not greater than 35% by mass, and further preferably not greater than 30% by mass. If the vinyl content falls within the above range, favorable steering stability and braking performance on a dry road surface and a wet road surface tend to be obtained.

The vinyl content (1,2-bond butadiene unit content) of the SBR can be measured by infrared absorption spectrometry.

The styrene content of the SBR is preferably not less than 10% by mass, more preferably not less than 25% by mass, and further preferably not less than 40% by mass. Meanwhile, the styrene content is preferably not greater than 70% by mass and more preferably not greater than 60% by mass. If the styrene content falls within the above range, favorable steering stability and braking performance on a dry road surface and a wet road surface tend to be obtained.

The styrene content of the SBR can be measured by ¹H-NMR measurement.

The weight-average molecular weight (Mw) of the SBR is preferably not less than 400,000, more preferably not less than 1,000,000, further preferably not less than 1,200,000, and particularly preferably not less than 1,300,000. Meanwhile, the Mw is preferably not greater than 1,800,000 and more preferably not greater than 1,500,000. If the Mw falls within the above range, favorable steering stability and braking performance on a dry road surface and a wet road surface tend to be obtained.

The Mw of the SBR can be obtained by converting, based on polystyrene standard, a value measured by gel permeation chromatography (GPC) (GPC-8000 series manufactured by Tosoh Corporation, detector: differential refractometer, column: TSKGEL SUPERMULTIPORE HZ-M manufactured by Tosoh Corporation).

The SBR may be either unmodified SBR or modified SBR. The modified SBR only needs to be SBR having a functional group that interacts with a filler such as silica. Examples of such modified SBR include end-modified SBR obtained by modifying at least one end of SBR with a compound (modifier) having the above functional group (end-modified SBR having the above functional group at an end thereof), main chain-modified SBR having the above functional group in the main chain thereof, main chain/end-modified SBR having the above functional group in the main chain and at an end thereof (for example, main chain/end-modified SBR that has the above functional group in the main chain thereof and in which at least one end thereof is modified with the above modifier), and end-modified SBR that is modified (coupled) with use of a multifunctional compound having two or more epoxy groups in the molecule thereof and to which a hydroxyl group or an epoxy group is introduced.

Examples of the above functional group include an amino group, an amide group, a silyl group, an alkoxysilyl group, an isocyanate group, an imino group, an imidazole group, a urea group, an ether group, a carbonyl group, an oxycarbonyl group, a mercapto group, a sulfide group, a disulfide group, a sulfonyl group, a sulfinyl group, a thiocarbonyl group, an ammonium group, an imide group, a hydrazo group, an azo group, a diazo group, a carboxyl group, a nitrile group, a pyridyl group, an alkoxy group, a hydroxyl group, an oxy group, and an epoxy group. These functional groups may have a substituent. Among them, an amino group (preferably, an amino group obtained by substituting a hydrogen atom of an amino group with an alkyl group having 1 to 6 carbon atoms), an alkoxy group (preferably, an alkoxy group having 1 to 6 carbon atoms), an alkoxysilyl group (preferably, an alkoxysilyl group having 1 to 6 carbon atoms), and an amide group, are preferable.

Examples of the modifier used for the modified SBR include: polyglycidyl ethers ofpolyhydric alcohols, such as ethylene glycol diglycidyl ether, glycerin triglycidyl ether, trimethylolethane triglycidyl ether, and trimethylolpropane triglycidyl ether; polyglycidyl ethers of aromatic compounds having two or more phenol groups, such as diglycidylated bisphenol A; polyepoxy compounds such as 1,4-diglycidylbenzene, 1,3,5-triglycidylbenzene, and polyepoxylated liquid polybutadiene; epoxy group-containing tertiary amines such as 4,4'-diglycidyl-diphenylmethylamine and 4,4'-diglycidyl-dibenzylmethylamine; diglycidylamino compounds such as diglycidylaniline, N,N'-diglycidyl-4-glycidyloxy aniline, diglycidyl orthotoluidine, tetraglycidyl meta-xylenediamine, tetraglycidylaminodiphenylmethane, tetraglycidyl-p-phenylenediamine, diglycidylaminomethylcyclohexane, and tetraglycidyl-1,3,-bisaminomethylcyclohexane;
amino group-containing acid chlorides such as bis-(1-methylpropyl)carbamic acid chloride, 4-morpholinecarbonyl chloride, 1-pyrrolidinecarbonyl chloride, N,N-dimethylcarbamic acid chloride, and N,N-diethylcarbamic acid chloride; epoxy group-containing silane compounds such as 1,3-bis-(glycidyloxypropyl)-tetramethyldisiloxane and (3-glycidyloxypropyl)-pentamethyldisiloxane;
sulfide group-containing silane compounds such as (trimethylsilyl)[3-(trimethoxysilyl)propyl]sulfide, (trimethylsilyl)[3-(triethoxysilyl)propyl]sulfide, (trimethylsilyl)[3 -(tripropoxysilyl)propyl] sulfide, (trimethylsilyl) [3 -(tributoxysilyl)propyl] sulfide, (trimethylsilyl)[3-(methyldimethoxysilyl)propyl]sulfide, (trimethylsilyl)[3-(methyldiethoxysilyl)propyl]sulfide, (trimethylsilyl)[3-(methyldipropoxysilyl)propyl]sulfide, and (trimethylsilyl)[3-(methyldibutoxysilyl)propyl]sulfide;
N-substituted aziridine compounds such as ethyleneimine and propyleneimine; alkoxysilanes such as methyltriethoxysilane, N,N-bis(trimethylsilyl)-3-aminopropyltrimethoxysilane, N,N-bis(trimethylsilyl)-3-aminopropyltriethoxysilane, N,N-bis(trimethylsilyl)aminoethyltrimethoxysilane, and N,N-bis(trimethylsilyl)aminoethyltriethoxysilane; (thio)benzophenone compounds having an amino group and/or a substituted amino group, such as 4-N,N-dimethylaminobenzophenone, 4-N,N-dit-butylaminobenzophenone, 4-N,N-diphenylaminobenzophenone, 4,4'-bis(dimethylamino)benzophenone, 4,4'-bis(diethylamino)benzophenone, 4,4'-bis(diphenylamino)benzophenone, and N,N,N',N' -bis-(tetraethylamino)benzophenone; benzaldehyde compounds having an amino group and/or a substituted amino group, such as 4-N,N-dimethylaminobenzaldehyde, 4-N,N-diphenylaminobenzaldehyde, and 4-N,N-divinylaminobenzaldehyde; N-substituted pyrrolidones such as N-methyl-2-pyrrolidone, N-vinyl-2-pyrrolidone, N-phenyl-2-pyrrolidone, N-t-butyl-2-pyrrolidone, and N-methyl-5-methyl-2-pyrrolidone; N-substituted piperidones such as N-methyl-2-piperidone, N-vinyl-2-piperidone, and N-phenyl-2-piperidone; N-substituted lactams such as N-methyl-ε-caprolactam, N-phenyl-ε-caprolactam, N-methyl-ω-laurolactam, N-vinyl-ω-laurolactam, N-methyl-β-propiolactam, and N-phenyl-β-propiolactam; and moreover,
N,N-bis-(2,3-epoxypropoxy)-aniline, 4,4-methylene-bis-(N,N-glycidylaniline), tris-(2,3-epoxypropyl)-1,3,5-triazine-2,4,6-triones, N,N-diethylacetamide, N-methylmaleimide, N,N-diethyl urea, 1,3-dimethylethylene urea, 1,3-divinylethylene urea, 1,3-diethyl-2-imidazolidinone, 1-methyl-3-ethyl-2-imidazolidinone, 4-N,N-dimethylaminoacetophenone, 4-N,N-diethylaminoacetophenone, 1,3-bis(diphenylamino)-2-propanone, and 1,7-bis(methylethylamino)-4-heptanone.

Modification with the above compounds (modifiers) can be carried out by a known method.

As the SBR, for example, SBRs manufactured by and available from Sumitomo Chemical Co., Ltd., JSR Corporation, Asahi Kasei Corporation, Zeon Corporation, etc., can be used.

The BR is not particularly limited, and a BR having a high cis content, a BR having a low cis content, a BR containing syndiotactic polybutadiene crystal, etc., can be used. These BRs may be used singly, or two or more of these BRs may be used in combination.

In the case where BR is contained, the amount of the BR in 100% by mass of the rubber component is preferably not less than 5% by mass and more preferably not less than 10% by mass. Meanwhile, the amount is preferably not greater than 40% by mass, more preferably not greater than 30% by mass, and further preferably not greater than 20% by mass. If the amount falls within the above range, favorable steering stability and braking performance on a dry road surface and a wet road surface tend to be obtained.

The cis content of the BR is preferably not less than 90% by mass, more preferably not less than 95% by mass, and further preferably not less than 98% by mass. The upper limit of the cis content is not particularly limited. If the cis content falls within the above range, the effect tends to be more favorably obtained.

The cis content of the BR can be measured by infrared absorption spectrometry.

The BR may be either unmodified BR or modified BR. Examples of the modified BR include modified BR into which the aforementioned functional group is introduced.

As the BR, for example, products of Ube Industries, Ltd., JSR Corporation, Asahi Kasei Corporation, Zeon Corporation, etc., can be used.

The rubber composition preferably contains a liquid diene-based polymer. The liquid diene-based polymer is a diene-based polymer in liquid form at normal temperature (25°C). With such a diene-based polymer, highly heat-generating rubber is obtained, whereby the grip can be improved, and the steering stability and the braking performance on a dry road surface and a wet road surface can be enhanced.

The amount of the liquid diene-based polymer per 100 parts by mass of the rubber component in the rubber composition is preferably not less than 1 part by mass and more preferably not less than 3 parts by mass. Meanwhile, the amount is preferably not greater than 30 parts by mass, more preferably not greater than 20 parts by mass, and further preferably not greater than 10 parts by mass. If the amount is set to be not less than the lower limit, an effect of improving the grip performance tends to be obtained. Meanwhile, if the amount is set to be not greater than the upper limit, favorable wear resistance tends to be obtained.

The weight-average molecular weight (Mw), of the liquid diene-based polymer, which is measured by gel permeation chromatography (GPC) and obtained by polystyrene conversion is preferably 1.0×10³ to 2.0×10⁵ and more preferably 3.0×10³ to 1.5×10⁴. If the Mw is set to be not less than the lower limit, favorable wear resistance and fracture properties are obtained, and sufficient durability tends to be able to be ensured. Meanwhile, if the Mw is set to be not greater than the upper limit, a polymerization solution has favorable viscosity, and excellent productivity tends to be obtained.

In the present invention, the Mw of the liquid diene-based polymer is a value that is measured by gel permeation chromatography (GPC) and obtained by polystyrene conversion.

Examples of the liquid diene-based polymer include liquid styrene-butadiene copolymers (liquid SBRs), liquid butadiene polymers (liquid BRs), liquid isoprene polymers (liquid IRs), liquid styrene-isoprene copolymers (liquid SIRs), liquid styrene-butadiene-styrene block copolymers (liquid SBS block polymers), liquid styrene-isoprene-styrene block copolymers (liquid SIS block polymers), liquid farnesene polymers, and liquid farnesene-butadiene copolymers. An end or the main chain of any of these liquid diene-based polymers may be modified with a polar group. Among them, liquid IRs and liquid SBRs are preferable.

The rubber composition may contain, in addition to the liquid diene-based polymer, another softener such as oil (softener in liquid form at normal temperature (25°C)). Examples of the oil include process oils such as paraffinic process oils, aromatic process oils, and naphthenic process oils.

From the viewpoint of performance balance between steering stability and braking performance on a dry road surface and a wet road surface, the amount of the softeners (the total amount of the softeners) per 100 parts by mass of the rubber component in the rubber composition is preferably 5 to 50 parts by mass, more preferably 7 to 40 parts by mass, and further preferably 10 to 30 parts by mass. In the present specification, the amount of the softeners includes also the amount of oil contained in oil-extended rubber.

A resin in solid form at normal temperature (25°C) may be blended in the rubber composition. From the viewpoints of steering stability and braking performance on a dry road surface and a wet road surface, the amount of the resin per 100 parts by mass of the rubber component is preferably 3 to 50 parts by mass and more preferably 7 to 40 parts by mass.

Examples of the resin include aromatic vinyl polymers, coumarone-indene resins, indene resins, rosin-based resins, terpene-based resins, and acrylic-based resins. As commercially available products, products of Maruzen Petrochemical Co., Ltd., Sumitomo Bakelite Co., Ltd., YASUHARA CHEMICAL CO., LTD, Tosoh Corporation, Rutgers Chemicals AG, BASF, Arizona Chemical Company, NITTO CHEMICAL CO., LTD., NIPPON SHOKUBAI CO., LTD., JXTG Nippon Oil & Energy Corporation, Arakawa Chemical Industries, Ltd., Taoka Chemical Co., Ltd., TOAGOSEI CO., LTD., etc., can be used. These resins may be used singly, or two or more of these resins may be used in combination. Among them, aromatic vinyl polymers, coumarone-indene resins, terpene-based resins, and rosin-based resins are preferable.

The above aromatic vinyl polymers may be resins obtained by polymerizing α-methylstyrene and/or styrene, and examples of such a resin include styrene homopolymers, α-methylstyrene homopolymers, and copolymers of α-methylstyrene and styrene. Among them, copolymers of α-methylstyrene and styrene are preferable.

The above coumarone-indene resins refer to resins that contain coumarone and indene as main monomer components that form the backbone (main chain) of the resins. Examples of the monomer components included in the backbone other than coumarone and indene, include styrene, α-methylstyrene, methylindene, and vinyltoluene.

The above indene resins refer to resins that contain indene as a main monomer component that forms the backbone (main chain) of the resins.

The above rosin-based resins (rosins) can be classified depending on whether the rosins are modified or not, that is, can be classified into non-modified rosins (unmodified rosins) and rosin-modified products (rosin derivatives). Examples of non-modified rosins include tall rosin (also called tall oil rosin), gum rosin, wood rosin, disproportionated rosins, polymerized rosins, hydrogenated rosins, and other chemically altered rosins. Rosin-modified products are obtained by modifying non-modified rosins, and examples of rosin-modified products include rosin esters, unsaturated carboxylic acid-modified rosins, unsaturated carboxylic acid-modified rosin esters, amide compounds of rosins, and amine salts of rosins.

The rosin-based resins preferably have a carboxyl group content not excessively high and preferably have an appropriate acid value. Specifically, the acid values of rosin-based resins ordinarily exceed 0 mgKOH/g, and is, for example, not greater than 200 mgKOH/g, preferably not greater than 100 mgKOH/g, more preferably not greater than 30 mgKOH/g, and further preferably not greater than 10 mgKOH/g.

The acid values can be measured in accordance with Examples described later. In a case where, for example, a rosin has an excessively high acid value, the acid value can be adjusted to fall within the above range by reducing carboxyl groups of the rosin through known esterification treatment.

As the above terpene-based resins, a polyterpene resin obtained by polymerizing a terpene compound, an aromatic modified terpene resin obtained by polymerizing a terpene compound and an aromatic compound, etc., can be used. Moreover, hydrogenated products of these resins can also be used.

The polyterpene resin is a resin that is obtained by polymerizing a terpene compound. Terpene compounds are hydrocarbons represented by a composition (C₅H₈)ₙ and oxygenated derivatives thereof, and are compounds having, as the basic backbone, a terpene classified into monoterpene (C₁₀H₁₆), sesquiterpene (C₁₅H₂₄), diterpene (C₂₀H₃₂), and the like. Examples of the terpene compounds include α-pinene, β-pinene, dipentene, limonene, myrcene, allo-ocimene, ocimene, α-phellandrene, α-terpinene, γ-terpinene, terpinolene, 1,8-cineole, 1,4-cineole, α-terpineol, β-terpineol, and γ-terpineol.

Examples of the above polyterpene resins include pinene resins, limonene resins, dipentene resins, and pinene-limonene resins which are formed from the above terpene compounds. Among the polyterpene resins, pinene resins are preferable since a polymerization reaction is easy and since natural pine resin is a raw material and thus the cost is low. In general, pinene resins contain both α-pinene and β-pinene, which are isomeric with each other. Depending on contained components, pinene resins are classified into β-pinene resins containing β-pinene as a main component, and α-pinene resins containing α-pinene as a main component.

Examples of the above aromatic modified terpene resin include terpene-phenol resins formed from the above terpene compounds and phenol compounds, and terpene-styrene resins formed from the above terpene compounds and styrene compounds. Moreover, terpene-phenol-styrene resins formed from the above terpene compounds, phenol compounds, and styrene compounds can also be used. Examples of phenol compounds include phenol, bisphenol A, cresol, and xylenol. Examples of styrene compounds include styrene and α-methylstyrene.

A fatty acid amide may be blended in the rubber composition. For example, if a resin is blended, rubber having a tendency of adhesion is obtained owing to the low softening point of the resin, but, by blending the fatty acid amide, the degree of adhesion (tack value) of the rubber can be reduced, and favorable processability is obtained.

The amount of the fatty acid amide per 100 parts by mass of the rubber component is preferably not less than 1.0 part by mass, more preferably not less than 1.5 parts by mass, and further preferably not less than 2.0 parts by mass. Meanwhile, the amount is preferably not greater than 10.0 parts by mass, more preferably not greater than 8.0 parts by mass, and further preferably not greater than 6.0 parts by mass. If the amount is adjusted to fall within the above range, a favorable degree of adhesion (tack value) tends to be obtained.

The fatty acid amide may be a saturated fatty acid amide or an unsaturated fatty acid amide. Examples of the saturated fatty acid amide include N-(1-oxooctadecyl)sarcosine, stearic acid amide, and behenic acid amide. Examples of the unsaturated fatty acid amide include oleic acid amide and erucic acid amide. The fatty acid forming the fatty acid amide preferably has 6 to 28 carbon atoms, more preferably has 10 to 25 carbon atoms, and further preferably has 14 to 20 carbon atoms. These fatty acid amides may be used singly, or two or more of these fatty acid amides may be used in combination.

For the rubber composition, it is possible to suitably use also a mixture further containing a fatty acid metal salt in addition to the fatty acid amide.

The fatty acid forming the fatty acid metal salt is not particularly limited and may be a saturated or unsaturated fatty acid (saturated or unsaturated fatty acid preferably having 6 to 28 carbon atoms (more preferably having 10 to 25 carbon atoms and further preferably having 14 to 20 carbon atoms)), and examples thereof include lauric acid, myristic acid, palmitic acid, stearic acid, oleic acid, linoleic acid, linolenic acid, arachidic acid, behenic acid, and nervonic acid. These fatty acids may be used singly, or two or more of these fatty acids may be used in combination. Among them, saturated fatty acids are preferable and saturated fatty acids having 14 to 20 carbon atoms are more preferable.

Examples of the metal forming the fatty acid metal salt include alkali metals such as potassium and sodium, alkaline earth metals such as magnesium, calcium, and barium, zinc, nickel, and molybdenum.

The amount of the mixture per 100 parts by mass of the rubber component is preferably not less than 1.0 part by mass, more preferably not less than 1.5 parts by mass, and further preferably not less than 2.0 parts by mass. Meanwhile, the amount is preferably not greater than 10.0 parts by mass, more preferably not greater than 8.0 parts by mass, and further preferably not greater than 6.0 parts by mass.

The rubber composition preferably contains sulfur (sulfur vulcanization agent).

Examples of the sulfur include powdery sulfur, precipitated sulfur, colloidal sulfur, insoluble sulfur, highly dispersible sulfur, and soluble sulfur, which are generally used in the rubber industry. As commercially available products, products of Tsurumi Chemical Industry Co., Ltd., Karuizawa Sulfur Co, Ltd., SHIKOKU CHEMICALS CORPORATION, Flexsys, Nippon Kanryu Industry Co., Ltd., Hosoi Chemical Industry Co., Ltd., etc., can be used. These sulfurs may be used singly, or two or more of these sulfurs may be used in combination.

The amount of the sulfur (sulfur vulcanization agent) per 100 parts by mass of the rubber component is preferably not less than 0.5 parts by mass and more preferably not less than 1.0 part by mass. If the amount is set to be not less than the lower limit, favorable steering stability, and braking performance and grip performance on a dry road surface and a wet road surface tend to be obtained. Although the upper limit of the amount is not particularly limited, the amount is preferably not greater than 5.0 parts by mass, more preferably not greater than 3.0 parts by mass, and further preferably not greater than 2.5 parts by mass.

The rubber composition preferably contains a vulcanization accelerator.

Examples of the vulcanization accelerator include: thiazole-based vulcanization accelerators such as 2-mercaptobenzothiazole, di-2-benzothiazolyl disulfide (DM (2,2'-dibenzothiazolyl disulfide)), and N-cyclohexyl-2-benzothiazyl sulfenamide; thiuram-based vulcanization accelerators such as tetramethylthiuram disulfide (TMTD), tetrabenzylthiuram disulfide (TBzTD), and tetrakis (2-ethylhexyl)thiuram disulfide (TOT-N); sulfenamide-based vulcanization accelerators such as N-cyclohexyl-2-benzothiazole sulfenamide, N-t-butyl-2-benzothiazolyl sulfenamide, N-oxyethylene-2-benzothiazole sulfenamide, and N,N'-diisopropyl-2-benzothiazole sulfenamide; and guanidine-based vulcanization accelerators such as diphenylguanidine, diorthotolylguanidine, and orthotolylbiguanidine. These vulcanization accelerators may be used singly, or two or more of these vulcanization accelerators may be used in combination. Among them, sulfenamide-based vulcanization accelerators and guanidine-based vulcanization accelerators are preferable.

From the viewpoint of vulcanization characteristics and the like, the amount of the vulcanization accelerator per 100 parts by mass of the rubber component is preferably not less than 2.0 parts by mass and more preferably not less than 3.5 parts by mass. Meanwhile, the amount is preferably not greater than 8.0 parts by mass and more preferably not greater than 7.0 parts by mass.

The rubber composition may contain wax. The wax is not particularly limited, and examples thereof include: petroleum waxes such as paraffin wax and microcrystalline wax; natural waxes such as vegetable wax and animal wax; and synthesized waxes such as polymers of ethylene, propylene, and the like. As commercially available products, products of Ouchi Shinko Chemical Industrial Co., Ltd., NIPPON SEIRO CO., LTD., Seiko Chemical Co., Ltd., etc., can be used. These waxes may be used singly, or two or more of these waxes may be used in combination. Among them, petroleum waxes are preferable, and paraffin wax is more preferable.

The amount of the wax per 100 parts by mass of the rubber component is preferably not less than 0.5 parts by mass and more preferably not less than 1 part by mass. Meanwhile, the amount is preferably not greater than 10 parts by mass and more preferably not greater than 6 parts by mass.

The rubber composition may contain an antioxidant.

The antioxidant is not particularly limited, and examples thereof include: naphthylamine antioxidants such as phenyl-α-naphthylamine; diphenylamine antioxidants such as octylated diphenylamine and 4,4'-bis(α,α'-dimethylbenzyl)diphenylamine; p-phenylenediamine antioxidants such as N-isopropyl-N'-phenyl-p-phenylenediamine, N-(1,3-dimethylbutyl)-N' -phenyl-p-phenylenediamine, and N,N' -di-2-naphthyl-p-phenylenediamine; quinoline antioxidants such as a polymer of 2,2,4-trimethyl-1,2-dihydroquinoline; monophenol antioxidants such as 2,6-di-t-butyl-4-methylphenol and styrenated phenol; and bis-, tris-, and poly-phenol antioxidants such as tetrakis-[methylene-3-(3',5'-di-t-butyl-4'-hydroxyphenyl)propionate]methane. As commercially available products, products of Seiko Chemical Co., Ltd., Sumitomo Chemical Co., Ltd., Ouchi Shinko Chemical Industrial Co., Ltd., Flexsys, etc., can be used. These antioxidants may be used singly, or two or more of these antioxidants may be used in combination. Among them, p-phenylenediamine antioxidants (more preferably N-(1,3-dimethylbutyl)-N'-phenyl-p-phenylenediamine) are preferable.

The amount of the antioxidant per 100 parts by mass of the rubber component is preferably not less than 0.3 parts by mass and more preferably not less than 1 part by mass. Meanwhile, the amount is preferably not greater than 7 parts by mass, more preferably not greater than 6 parts by mass, and further preferably not greater than 5 parts by mass.

The rubber composition may contain a fatty acid, particularly stearic acid.

As the stearic acid, conventionally known stearic acids can be used. For example, products of NOF Corporation, Kao Corporation, FUJIFILM Wako Pure Chemical Corporation, New Japan Chemical Co., Ltd., etc., can be used.

The amount of the fatty acid per 100 parts by mass of the rubber component is preferably not less than 0.5 parts by mass and more preferably not less than 1 part by mass. Meanwhile, the amount is preferably not greater than 10 parts by mass and more preferably not greater than 5 parts by mass.

The rubber composition may contain zinc oxide.

As the zinc oxide, conventionally known zinc oxides can be used. For example, products of Mitsui Mining & Smelting Co., Ltd., Toho Zinc Co., Ltd., HAKUSUI TECH CO., LTD., SEIDO CHEMICAL INDUSTRY CO., LTD., Sakai Chemical Industry Co., Ltd., etc., can be used.

The amount of the zinc oxide per 100 parts by mass of the rubber component is preferably not less than 0.5 parts by mass and more preferably not less than 1 part by mass. Meanwhile, the amount is preferably not greater than 5 parts by mass and more preferably not greater than 4 parts by mass.

In addition to the aforementioned components, additives that are generally used in the tire industry can be blended in the rubber composition, and examples of the additives include surfactants.

As a method for producing the rubber composition, a known method can be used. For example, the rubber composition can be produced by a method in which the components are kneaded with use of a rubber kneading device such as an open roll, a Banbury mixer, or a kneader, and then vulcanization is performed.

Kneading conditions are as follows: in a base kneading step of kneading the additives other than a cross-linking agent (vulcanizing agent) and the vulcanization accelerator, the kneading temperature is normally 100 to 180°C and preferably 120 to 170°C; and, in a finish kneading step of kneading the vulcanizing agent and the vulcanization accelerator, the kneading temperature is normally not greater than 120°C and preferably 85 to 110°C. In addition, a composition obtained by kneading the vulcanizing agent and the vulcanization accelerator is normally subjected to vulcanization processing such as press vulcanization. The vulcanization temperature is normally 140 to 190°C and preferably 150 to 185°C.

The pneumatic tire according to the present invention is produced by a general method using the above rubber composition. Specifically, the rubber composition obtained by blending the above components is extruded in an unvulcanized state so as to correspond to the shape of, for example, a tread (a member, which is brought into contact with a road surface, such as a single-layer tread or a cap tread of a multilayer tread), and is formed together with other tire members on a tire forming machine by a general method, thereby obtaining an unvulcanized tire. The unvulcanized tire is heated and pressurized in a vulcanizing machine, thereby obtaining the tire.

The tire can be used as a tire for a passenger car, a tire for a large-sized passenger car, a tire for a large-sized SUV, a heavy duty tire for a truck, a bus, and the like, a tire for a light truck, a tire for a two-wheeled vehicle, a racing tire (high performance tire), and the like.

### EXAMPLES

Various chemicals used in Examples and Comparative Examples will be collectively described.

SBR: SLR6430 (styrene content: 40% by mass, vinyl content: 24% by mass, Mw: 1.36 million, containing 37.5 parts by mass of oil per 100 parts by mass of rubber solid contents) manufactured by Dow Chemical Co.

BR: BR150B (cis content: 98% by mass) manufactured by Ube Industries, Ltd.

Carbon black: SHOBLACK N134 (N₂SA: 148 m²/g) manufactured by Cabot Japan K.K.

Silica: ULTRASILVN3 (N₂SA: 172 m²/g) manufactured by Evonik Degussa GmbH

Silane coupling agent: Si266 (bis(3-triethoxysilylpropyl)disulfide) manufactured by Evonik Degussa GmbH

Oil: VIVATEC 400 (TDAE oil) manufactured by H&R

Resin: SYLVARES SA85 (a copolymer of α-methylstyrene and styrene, softening point: 85°C) manufactured by Arizona Chemical Company

Liquid IR: LIR-50 (Mw: 54000) manufactured by KURARAY CO., LTD.

Metal mold-releasing agent (processing aid): WB16 (a mixture of a fatty acid metal salt (fatty acid calcium, fatty acid of fatty acid calcium: a saturated fatty acid having 14 to 20 carbon atoms) and fatty acid amide) manufactured by Struktol

Sulfur: HK-200-5 (5%-oil sulfur) manufactured by Hosoi Chemical Industry Co., Ltd.

Vulcanization accelerator CZ: NOCCELER CZ (N-cyclohexyl-2-benzothiazolyl sulfenamide) manufactured by Ouchi Shinko Chemical Industrial Co., Ltd.

Vulcanization accelerator DPG: NOCCELER D (1,3-diphenylguanidine) manufactured by Ouchi Shinko Chemical Industrial Co., Ltd.

### (Examples and Comparative Examples)

In accordance with each of the blending formulas shown in tables 1 and 2, the chemicals other than the sulfur and the vulcanization accelerator were kneaded under a condition of 150°C for five minutes with use of a 1.7-L Banbury mixer manufactured by Kobe Steel, Ltd., to obtain a kneaded product. Next, the sulfur and the vulcanization accelerator were added to the obtained kneaded product, and the mixture was kneaded under a condition of 80°C for five minutes with use of an open roll, to obtain an unvulcanized rubber composition.

In accordance with each of the specifications shown in tables 1 and 2, the obtained unvulcanized rubber composition was formed into the shape of a tread, and attached together with other tire members, to produce an unvulcanized tire. The unvulcanized tire was press-vulcanized under a condition of 170°C for ten minutes, thereby obtaining a test tire (size: 195/65R15) having the tread ground-contact surface shown in FIGS. 1 and 2. Rubber test piece evaluations were performed on a rubber that was cut out from the tread portion of each test tire.

The obtained test tires, rubber test pieces, and unvulcanized rubber compositions were evaluated as described below. The results are shown in tables 1 and 2.

### <Hardness (Tread Stiffness)>

The hardness (Hs) of each rubber test piece at 23°C was measured with a type A durometer in accordance with JIS K 6253 "Rubber, vulcanized or thermoplastic - Determination of hardness". Each measurement value is indicated as an index with the measurement value of Example 1 being regarded as 100. A larger numerical value indicates that the tread stiffness is higher.

### <Measurement of Viscoelasticity (Heat Generation Performance)>

The loss tangent (tanδ) of each rubber test piece was measured under a condition of a temperature of 30°C, a frequency of 10 Hz, an initial strain of 10%, and a dynamic strain of 2%, with use of a viscoelasticity spectrometer VES (manufactured by Iwamoto Seisakusho). Each measurement value is indicated as an index with the measurement value of Example 1 being regarded as 100. A larger numerical value indicates that the grip performance is higher.

### <Measurement of Viscoelasticity (Wet Grip Performance)>

The loss tangent (tanδ) of each rubber test piece was measured under a condition of a temperature of 0°C, a frequency of 10 Hz, an initial strain of 10%, and a dynamic strain of 2%, with use of a viscoelasticity spectrometer VES (manufactured by Iwamoto Seisakusho). Each measurement value is indicated as an index with the measurement value of Example 1 being regarded as 100. A larger numerical value indicates that the grip performance on a wet road surface is higher.

### <Processability (Viscosity)>

In accordance with JIS K 6300-1 "Rubber, unvulcanized-Physical property-Part 1: Determination of Mooney viscosity and pre-vulcanization characteristics with Mooney viscometer", the Mooney viscosity (ML₁₊₄/130°C) of each unvulcanized rubber composition was measured with use of a Mooney viscosity tester at a time point when four minutes had elapsed from the start of rotation of a small rotor under a temperature condition of 130°C to which preheating was performed for one minute. Each measurement value is indicated as an index with the Mooney viscosity of Example 1 being regarded as 100. A larger index indicates that the viscosity is lower and the processability is more excellent.

### <Processability (Tack Value)>

The tack value of each sample sheet (each unvulcanized rubber composition) at 80°C was measured with a tack meter. Each measurement value is indicated as an index with the tack value of Example 1 being regarded as 100. A larger index indicates that the degree of adhesion (tack value) is lower.

### <Steering Stability>

The test tires were mounted to all the wheels of a vehicle (a front wheel drive vehicle with an engine displacement of 2000 cc, manufactured in Japan), the vehicle was caused to actually run on a test course, and sensory evaluations as to the steering stability were made by a driver. Each measurement value is indicated as an index with the steering stability of Example 1 being regarded as 100. A larger index indicates that the steering stability is more excellent.

### <Braking Performance on Dry Road Surface>

The test tires were mounted to all the wheels of a vehicle (a front wheel drive vehicle with an engine displacement of 2000 cc, manufactured in Japan), and the braking distance from an initial speed of 100 km/h was obtained on a dry asphalt road surface. Each measurement value is indicated as an index with the measurement value of Example 1 being regarded as 100. A larger index indicates that the braking distance is shorter and the braking performance on a dry road surface is more excellent.

### <Braking Performance on Wet Road Surface>

The test tires were mounted to all the wheels of a vehicle (a front wheel drive vehicle with an engine displacement of 2000 cc, manufactured in Japan), the braking distance from an initial speed of 100 km/h was obtained on a wet asphalt road surface, and each measurement value is indicated as an index with the measurement value of Example 1 being regarded as 100. A larger index indicates that the braking distance is shorter and the braking performance on a wet road surface is more excellent.

**[Table 1]**

| | | Examples | | | | | | | | | | | | | | |
|---|---|---|---|---|---|---|---|---|---|---|---|---|---|---|---|---|
| | | 1 | 2 | 3 | 4 | 5 | 6 | 7 | 8 | 9 | 10 | 11 | 12 | 13 | 14 | 15 |
| SBR (SLR6430) | | 110 | 110 | 110 | 110 | 110 | 110 | 110 | 110 | 110 | 110 | 110 | 110 | 110 | 110 | 110 |
| BR (BR150B) | | 20 | 20 | 20 | 20 | 20 | 20 | 20 | 20 | 20 | 20 | 20 | 20 | 20 | 20 | 20 |
| Carbon black (N134) | | 23 | 23 | 23 | 10 | 20 | 23 | 23 | 23 | 23 | 23 | 23 | 23 | 23 | 23 | 23 |
| Silica (VN3) | | 95 | 95 | 95 | 95 | 95 | 90 | 95 | 95 | 95 | 95 | 95 | 95 | 95 | 95 | 100 |
| Silane coupling agent (Si266) | | 7.6 | 7.6 | 7.6 | 7.6 | 7.6 | 7.6 | 7.6 | 7.6 | 7.6 | 7.6 | 7.6 | 7.6 | 7.6 | 7.6 | 7.6 |
| Oil (VIVATEC 400) | | 20 | 20 | 20 | 20 | 20 | 20 | 20 | 20 | 20 | 20 | 20 | 20 | 20 | 20 | 20 |
| Resin (SA85) | | 10 | 10 | 10 | 10 | 10 | 10 | 10 | 10 | 10 | 10 | 10 | 10 | 10 | 10 | 10 |
| Liquid IR (LIR-50) | | 5 | - | 5 | 5 | 5 | 5 | 5 | 5 | 5 | 5 | 5 | 5 | 5 | 5 | 5 |
| Metal mold-releasing agent (WB16) | | 3 | 3 | - | 3 | 3 | 3 | 3 | 3 | 3 | 3 | 3 | 3 | 3 | 3 | 3 |
| Sulfur | | 1.4 | 1.4 | 1.4 | 1.4 | 1.4 | 1.4 | 1.4 | 1.4 | 1.4 | 1.4 | 1.4 | 1.4 | 1.4 | 1.4 | 1.4 |
| Vulcanization accelerator CZ | | 2.0 | 2 | 2 | 2 | 2 | 2 | 2 | 2 | 2 | 2 | 2 | 2 | 2 | 2 | 2 |
| Vulcanization accelerator DPG | | 2.5 | 2.5 | 2.5 | 2.5 | 2.5 | 2.5 | 2.5 | 2.5 | 2.5 | 2.5 | 2.5 | 2.5 | 2.5 | 2.5 | 2.5 |
| Tread stiffness | Hs | 68 | 68 | 68 | 64 | 66 | 67 | 68 | 68 | 68 | 68 | 68 | 68 | 68 | 68 | 68 |
| | Index | 100 | 100 | 100 | 94 | 97 | 99 | 100 | 100 | 100 | 100 | 100 | 100 | 100 | 100 | 100 |
| Heat generation performance | Tanδ at 30°C | 0.35 | 0.35 | 0.35 | 0.29 | 0.32 | 0.33 | 0.35 | 0.35 | 0.35 | 0.35 | 0.35 | 0.35 | 0.35 | 0.35 | 0.33 |
| | Index | 100 | 100 | 100 | 83 | 91 | 94 | 100 | 100 | 100 | 100 | 100 | 100 | 100 | 100 | 94 |
| Wet grip performance | Tanδ at 0°C | 0.9 | 0.92 | 0.91 | 0.86 | 0.88 | 0.86 | 0.9 | 0.9 | 0.9 | 0.9 | 0.9 | 0.9 | 0.9 | 0.9 | 0.92 |
| | Index | 100 | 102 | 101 | 96 | 98 | 96 | 100 | 100 | 100 | 100 | 100 | 100 | 100 | 100 | 102 |
| Processability index (viscosity) | | 100 | 90 | 102 | 110 | 105 | 102 | 100 | 100 | 100 | 100 | 100 | 100 | 100 | 100 | 90 |
| Processability index (tack value) | | 100 | 95 | 85 | 105 | 102 | 101 | 100 | 100 | 100 | 100 | 100 | 100 | 100 | 100 | 93 |
| I. Proportion of length in tire axial direction of each shoulder lateral groove with respect to tread width (%) | | 15 | 15 | 15 | 15 | 15 | 15 | 10 | 30 | 15 | 15 | 15 | 15 | 15 | 15 | 15 |
| II. Total length in tire axial direction of axial sipes/total length in tire axial direction of shoulder lateral grooves, in shoulder land portion | | 0.2 | 0.2 | 0.2 | 0.2 | 0.2 | 0.2 | 0.2 | 0.2 | 0.1 | 0 | 0.2 | 0.2 | 0.2 | 0.2 | 0.2 |
| III. Proportion of distance in tire circumferential direction between adjacent shoulder lateral grooves with respect to tread width (%) | | 10 | 10 | 10 | 10 | 10 | 10 | 10 | 10 | 10 | 10 | 5 | 15 | 3 | 20 | 10 |
| Steering stability | | 100 | 100 | 100 | 94 | 97 | 99 | 92 | 105 | 103 | 108 | 103 | 95 | 103 | 86 | 100 |
| Braking performance on dry road surface | | 100 | 100 | 100 | 83 | 91 | 94 | 101 | 96 | 97 | 93 | 97 | 101 | 89 | 99 | 94 |
| Braking performance on wet road surface | | 100 | 102 | 101 | 96 | 98 | 96 | 103 | 94 | 96 | 92 | 96 | 100 | 94 | 102 | 102 |

**[Table 2]**

| | | Comparative Examples | | | | |
|---|---|---|---|---|---|---|
| | | 1 | 2 | 3 | 4 | 5 |
| SBR (SLR6430) | | 110 | 110 | 110 | 110 | 110 |
| BR (BR150B) | | 20 | 20 | 20 | 20 | 20 |
| Carbon black (N 134) | | 5 | 23 | 23 | 23 | 23 |
| Silica (VN3) | | 95 | 80 | 95 | 95 | 95 |
| Silane coupling agent (Si266) | | 7.6 | 7.6 | 7.6 | 7.6 | 7.6 |
| Oil (VIVATEC 400) | | 20 | 20 | 20 | 20 | 20 |
| Resin (SA85) | | 10 | 10 | 10 | 10 | 10 |
| Liquid IR (LIR-50) | | 5 | 5 | 5 | 5 | 5 |
| Metal mold-releasing agent (WB 16) | | 3 | 3 | 3 | 3 | 3 |
| Sulfur | | 1.4 | 1.4 | 1.4 | 1.4 | 1.4 |
| Vulcanization accelerator CZ | | 2 | 2 | 2 | 2 | 2 |
| Vulcanization accelerator DPG | | 2.5 | 2.5 | 2.5 | 2.5 | 2.5 |
| Tread stiffness | Hs | 63 | 64 | 68 | 68 | 68 |
| | Index | 93 | 94 | 100 | 100 | 100 |
| Heat generation performance | Tanδ at 30°C | 0.27 | 0.3 | 0.35 | 0.35 | 0.35 |
| | Index | 77 | 86 | 100 | 100 | 100 |
| Wet grip performance | Tanδ at 0°C | 0.83 | 0.75 | 0.9 | 0.9 | 0.9 |
| | Index | 92 | 83 | 100 | 100 | 100 |
| Processability index (viscosity) | | 111 | 110 | 100 | 100 | 100 |
| Processability index (tack value) | | 106 | 107 | 100 | 100 | 100 |
| I. Proportion of length in tire axial direction of each shoulder lateral groove with respect to tread width (%) | | 15 | 15 | 5 | 35 | 15 |
| II. Total length in tire axial direction of axial sipes/total length in tire axial direction of shoulder lateral grooves, in shoulder land portion | | 0.2 | 0.2 | 0.2 | 0.2 | 0.3 |
| III. Proportion of distance in tire circumferential direction between adjacent shoulder lateral grooves with respect to tread width (%) | | 10 | 10 | 10 | 10 | 10 |
| Steering stability | | 93 | 94 | 85 | 110 | 90 |
| Braking performance on dry road surface | | 77 | 86 | 98 | 87 | 95 |
| Braking performance on wet road surface | | 92 | 83 | 97 | 83 | 96 |

According to tables 1 and 2, the steering stability and the braking performance on a dry road surface and a wet road surface of the Examples were enhanced in a balanced manner, and the Examples had favorable processability. In each of the Examples, the shoulder land portions had the shoulder lateral grooves extending in the tire axial direction, and, as necessary, axial sipes extending in the tire axial direction, the proportion of the length in the tire axial direction of each shoulder lateral groove with respect to the tread width falls within a predetermined range, and the value of the total length in the tire axial direction of the axial sipes/the total length in the tire axial direction of the shoulder lateral grooves falls within a predetermined range.

## Claims

1. A pneumatic tire (1) comprising
a tread portion (2) which has
at least three circumferential main grooves (3) extending in a tire circumferential direction, and
at least four land portions (4) separated by the circumferential main grooves (3) and including shoulder land portions (4s) provided on outermost sides in a tire axial direction, wherein
at least one of the shoulder land portions (4s) has shoulder lateral grooves (30) extending in the tire axial direction, and, as necessary, axial sipes (26) extending in the tire axial direction, **characterized in that**
within a tread ground-contact surface, a length (L30) in the tire axial direction of each of the shoulder lateral grooves (30) is 10 to 30% of a tread width (TW), and the following formula (I) is satisfied:
0 ≤ a total length in the tire axial direction of the axial sipes (26)/a total length in the tire axial direction of the shoulder lateral grooves (30) ≤ 0.2 (I), and
a rubber composition forming each shoulder land portion (4s) contains not less than 10 parts by mass of carbon black and not less than 90 parts by mass of silica, per 100 parts by mass of a rubber component.

2. The pneumatic tire (1) according to claim 1, wherein the rubber composition forming each shoulder land portion (4s) contains not less than 20 parts by mass of the carbon black per 100 parts by mass of the rubber component.

3. The pneumatic tire (1) according to claim 1 or 2, wherein a distance (l₃₀) in the tire circumferential direction between the shoulder lateral grooves (30) that are adjacent to each other is 5 to 15% of the tread width (TW).

## Patentansprüche

1. Luftreifen (1), umfassend
einen Laufflächenabschnitt (2), der aufweist
mindestens drei Umfangshauptrillen (3), die sich in einer Reifenumfangsrichtung erstrecken, und
mindestens vier Landabschnitte (4), die durch die Umfangshauptrillen (3) getrennt sind und Schulterlandabschnitte (4s) umfassen, die auf den äußersten Seiten in einer axialen Richtung des Reifens vorgesehen sind, wobei
mindestens einer der Schulterlandabschnitte (4s) Schulterquerrillen (30), die sich in der axialen Richtung des Reifens erstrecken, und gegebenenfalls axiale Feinschnitte (26) aufweist, die sich in der axialen Richtung des Reifens erstrecken, **dadurch gekennzeichnet, dass**
innerhalb einer Laufflächen-Boden-Kontaktfläche eine Länge (L30) in der axialen Richtung des Reifens von jeder der Schulterquerrillen (30) 10 bis 30% einer Laufflächenbreite (TW) beträgt und die folgende Formel (I) erfüllt ist:
0 ≤ eine Gesamtlänge in der axialen Richtung der axialen Feinschnitte (26) / eine Gesamtlänge in der axialen Richtung der Schulterquerrillen (30) ≤ 0,2 (I), und
eine Kautschukzusammensetzung, die jeden Schulterlandabschnitt (4s) bildet, nicht weniger als 10 Massenteile Ruß und nicht weniger als 90 Massenteile Siliciumdioxid pro 100 Massenteile einer Kautschukkomponente enthält.

2. Luftreifen (1) nach Anspruch 1, wobei die Kautschukzusammensetzung, die jeden Schulterlandabschnitt (4s) bildet, nicht weniger als 20 Massenteile des Rußes pro 100 Massenteile der Kautschukkomponente enthält.

3. Luftreifen (1) nach Anspruch 1 oder 2, wobei ein Abstand (l₃₀) in der Reifenumfangsrichtung zwischen den Schulterquerrillen (30), die nebeneinander liegen, 5 bis 15% der Laufflächenbreite (TW) beträgt.

## Revendications

1. Pneumatique (1) comprenant
une partie bande de roulement (2) qui présente
au moins trois rainures circonférentielles principales (3) s'étendant dans une direction circonférentielle de pneu, et
au moins quatre parties en relief (4) séparées par les rainures circonférentielles principales (3) et incluant des parties en relief d'épaulement (4s) placées sur les côtés les plus à l'extérieur dans une direction axiale de pneu, dans lequel
au moins une des parties en relief d'épaulement (4s) présente des rainures latérales d'épaulement (30) s'étendant dans la direction axiale du pneu, et, si nécessaire, des incisions axiales (26) s'étendant dans la direction axiale du pneu, **caractérisé en ce que**,
dans une surface de contact avec le sol de la bande de roulement, une longueur (L30) dans la direction axiale du pneu de chacune des rainures latérales d'épaulement (30) est égale à raison de 10 à 30 % à une largeur de bande de roulement (TW), et la formule suivante (I) est satisfaite :
0 ≤ une longueur totale dans la direction axiale du pneu des incisions axiales (26) / une longueur totale du pneu dans la direction axiale du pneu des rainures latérales d'épaulement (30) ≤ 0,2 (I), et
une composition de caoutchouc formant chaque partie en relief d'épaulement (4s) ne contient pas moins de 10 parties en masse de noir de carbone et pas moins de 90 parties en masse de silice, pour 100 parties en masse d'un composant caoutchouté.

2. Pneumatique (1) selon la revendication 1, dans lequel la composition caoutchoutée formant chaque partie en relief d'épaulement (4s) ne contient pas moins de 20 parties en masse de noir de carbone pour 100 parties en masse de composant caoutchouté.

3. Pneumatique (1) selon la revendication 1 ou la revendication 2, dans lequel une distance (l₃₀) dans la direction circonférentielle du pneu entre les rainures latérales d'épaulement (30) qui sont adjacentes les unes aux autres est égale à raison de 5 à 15 % à la largeur de la bande de roulement (TW).
